# EUROPEAN PATENT SPECIFICATION

(11) **EP 3 926 359 B1**
(45) Date of publication and mention of the grant of the patent: **28.08.2024**
(21) Application number: 20180420.0
(22) Date of filing: 17.06.2020
(51) Int. Cl.: G01S 7/40

(54) **SYSTEM AND METHOD FOR TESTING A BEAM PATTERN OF A VEHICULAR RADAR**
SYSTEM UND VERFAHREN ZUM TESTEN EINES STRAHLMUSTERS EINES FAHRZEUGRADARS
SYSTÈME ET PROCÉDÉ POUR TESTER UN MOTIF DE FAISCEAU D'UN RADAR DE VÉHICULE

(43) Date of publication of application: 22.12.2021
(73) Proprietor: Rohde & Schwarz GmbH & Co. KG, 81671 München (DE)
(72) Inventor: Steffens, Johannes, 83026 Rosenheim (DE); Schoch, Andre, 85586 Poing (DE)
(74) Representative: Novagraaf Group

(56) References cited:
- WO-A1-2010/058194
- DE-A1- 102009 038 907
- DE-A1- 102018 208 464
- US-A1- 2020 136 263

## Description

The invention relates to measuring and visualizing the radiation pattern of a vehicular radar, preferably mounted in a vehicle.

For measuring the radiation pattern of radar devices, usually complex setups having a moveable test antenna and complicated measuring hardware are necessary. These setups require highly trained personnel to perform measurements on the radar devices. This is feasible in a lab environment or in a production environment, but not in a garage environment for servicing vehicles. For example, US 2019/0391233 A1 shows such a complicated to operate system for testing vehicular radars.

US 2020/136263 A1 discloses a millimeter-wave detect or reflect array.

Accordingly, an object of the invention is to provide a system and a method, which allow for a testing of a vehicular radar and which at the same time do not require highly skilled personnel and which are applicable in a garage surrounding.

The invention is set out in the appended set of claims. The object is solved by the features of the independent claims. Additional features of the invention are provided in the dependent claims.

An inventive measuring system serves the purpose of testing a beam pattern of a vehicular radar. The measuring system comprises at least one radar test panel, which is arranged in an expected radiation direction of the vehicular radar. Each of the at least one radar test panels comprises a 2D radar test array of radar receivers. The at least one radar test panel is therein configured to display a measured beam pattern of the vehicular radar, using the radar receivers. Alternatively, the at least one radar test panel is configured to output a digitized measured beam pattern of the vehicular radar. This allows for a very simple implementation in a workshop environment and does not require a great deal of operator skill.

It may be noted that the radar receivers are configured to not only perform a receiving, but also at least some processing and/or displaying of information.

Each of the radio receivers is configured to receive radar radiation from the vehicular radar and emit visible light based upon the received radar radiation. The radar receivers therefore form pixels and directly show where radar radiation from the vehicular radar actually hits the radar test panel. This allows for a very intuitive operation by personnel of low training level. Also, the system can be used in a garage setup, since no moving test antennas or sensitive measuring devices are required.

Preferably, the measuring system comprises at least two radar test panels, which are preferably arranged side-by-side. This allows for an enlargement of a testing area, and thereby of an angle under investigation around the radar under test.

Preferably, the at least two radar test panels are arranged in an angle smaller than 180° with regard to each other. This allows for minimizing the footprint of the measuring system while at the same time allowing for measuring of a larger angle around the vehicle.

Advantageously and preferably, the system comprises a plurality of radar test panels, which are arranged in a half-circle or half-ellipse or U-shape, encompassing at least part of a vehicle comprising the vehicular radar under test. Alternatively, the plurality of radar test panels are arranged in any shape surrounding the entire vehicle. This allows for an especially small footprint of the resulting system, while at the same time achieving a testing capability of a large angle around the vehicle.

According to the invention, the radar receivers comprises a radar receiver, which is configured to receive the radar radiation from the vehicular radar, an amplifier configured to amplify the received radar signal, and a light emitter configured to emit the visible light based upon the amplified received radar signal. This allows for a very simple and self-contained construction of the measuring system.

Advantageously and preferably, the light emitter comprises at least one LED, preferably and RGB-LED. This allows for a low power visualization while at the same time allowing for a high information density.

Preferably, the light emitter is configured to emit light of a pre-specified brightness and/or color if the amplified signal exceeds a threshold. This allows for a very simple construction of the system while achieving an especially easy to interpret result of the measurement.

Alternatively, the radar receivers each comprise a mapper, which is configured to map a signal strength of the amplified received radar signal to a color and/or brightness of visible light to be emitted by the light emitter. The light emitter is then configured to emit light of the color and/or brightness determined by the mapper. This allows for a significant increase in the information density.

Preferably, the at least one radar test panel comprises a reference marking showing a shape of a reference radiation pattern. Such a reference marking can, for example, be a line, preferably a colored line, drawn on the radar test panel showing areas where the radio receivers are supposed to light up due to radar radiation hitting it in these areas, and areas, which are not supposed to light up. This allows for an especially simple interpretation of the results by a low-skill worker.

Preferably, each of the radar receivers comprises a digitizer, configured to digitize a signal generated from radar radiation emitted by the vehicular radar and received by the radar receiver, resulting in a digital received radar signal. The measuring system then additionally comprises a readout interface connected to each of digitizers of the radar receivers, configured to read out a digitized measured radiation pattern of the vehicular radar, formed by the digital received radar signals.

Moreover, the readout interface is configured to provide the read out measured radiation pattern of the vehicular radar as a digital measured radiation pattern. This allows for a simple further processing of the measured radiation pattern.

Preferably, the measuring system additionally comprises a reference storage configured to store a digital reference radiation pattern for at least one vehicular radar type. This allows for tracking a compliance of the measured radiation pattern in comparison to the stored pattern.

Preferably, the measuring system additionally comprises a comparer configured to compare the digital measured radiation pattern to the stored radiation pattern generating a comparison result. By automatically determining the comparison result, the requirements regarding the skill level of the operator can be further reduced.

Advantageously and preferably, the at least one radar test panel is configured to display the at least one reference radiation pattern and/or the comparison result before and/or after and/or while displaying the measured beam pattern of the vehicular radar using the 2D radar test array of radar receivers. This allows for displaying results without the use of need of an additional display device. This results in a very low hardware complexity and a very robust construction of the entire measuring system.

Alternatively or additionally, the measuring system comprises a display, which is configured to display the digital measured radiation pattern and/or the reference radiation pattern and/or the comparison result. This allows for an even more accurate display of the results.

An inventive measuring method serves the purpose of testing a beam pattern of a vehicular radar. The method comprises arranging at least one radar test panel in an expected radiation direction of a vehicular radar, emitting a radar signal by the vehicular radar, receiving radar radiation from the vehicular radar by a plurality of radio receivers comprised by the at least one radar test panel, and displaying a measured beam pattern of the vehicular radar by emitting visible light based upon the received radar radiation by the plurality of radar receivers. Alternatively, the method comprises outputting a digitized measured beam pattern of the vehicular radar. This allows for a very simple implementation in a workshop environment and does not require a great deal of operator skill.

Exemplary embodiments of the invention are now further explained with regard to the drawings, in which
- Fig. 1: shows a first embodiment of the inventive measuring system;
- Fig. 2: shows a second embodiment of the inventive measuring system in a detail view;
- Fig. 3: shows a third embodiment of the inventive measuring system in a detail view;
- Fig. 4: shows a fourth embodiment of the inventive measuring system in a detail view showing the inner construction of a radar test panel;
- Fig. 5: shows a fifth embodiment of the inventive system showing a detail view of a radar receiver in a block diagram;
- Fig. 6: shows an example which does not form part of the invention;
- Fig. 7: shows a seventh embodiment of the inventive system in a detail view, and
- Fig. 8: shows an embodiment of the inventive measuring method.

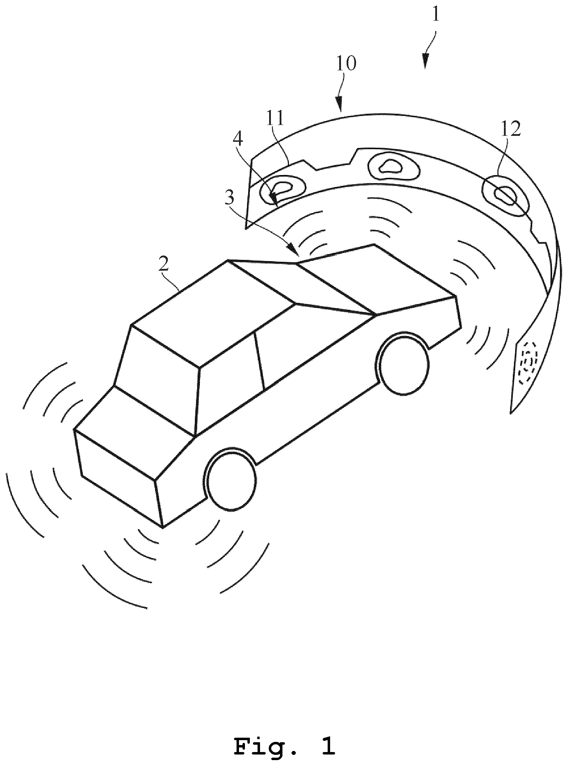

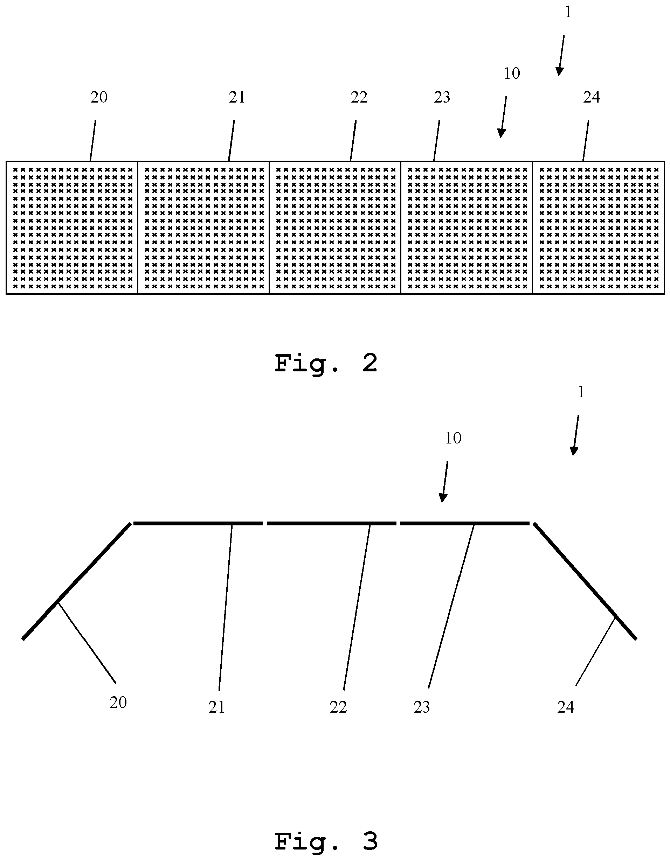

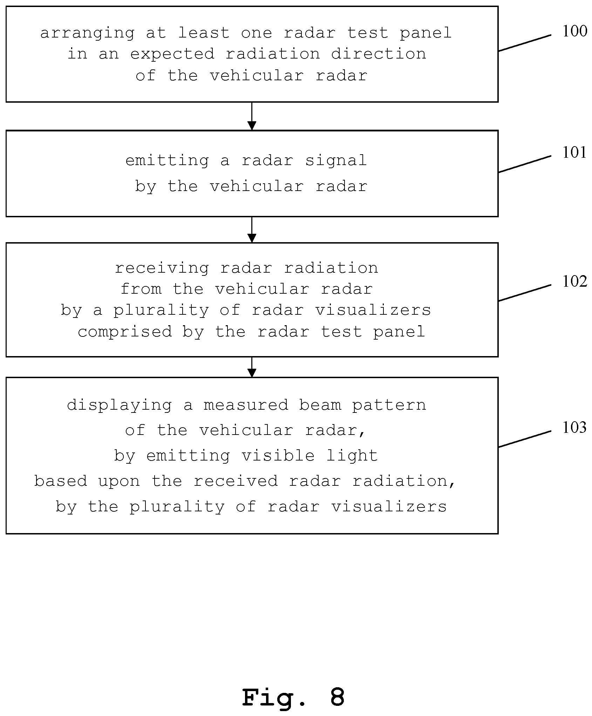

First, we demonstrate the general construction and function of an embodiment of the inventive measuring system along Fig. 1. With regard to Fig. 2 to Fig. 7, further construction details and functions of different embodiments of inventive measuring system are shown and described. Finally, along Fig. 8, the function of an embodiment of an inventive measuring method is described in detail. Similar entities and reference numbers in different Figures have been partially omitted.

In Fig. 1, a first example of the measuring system 1 is shown. Here, a plurality of radar test panels 10 is arranged in a half-circle shape around a front portion of a vehicle 2. The vehicle 2 comprises several vehicular radars 3. Each of the vehicular radars 3 emits radar radiation, which hits one or more of the plurality of radar test panels 10. The radar test panels 10 each comprise a 2D radar test array of radar receivers, which receive the radar radiation from the vehicular radar and emit visual light based upon the received radar radiation. The emitted light is shown here as a measured beam pattern 12. Additionally, a reference marking 11 is shown here. The reference marking 11 shows areas in which radar radiation is expected and areas in which no radar radiation is expected. In this example, radio radiation is expected below the reference marking 11, while no radio radiation is expected above the reference marking 11. This makes it very simple for an operator of the system to determine if the vehicular radar is adjusted properly or not.

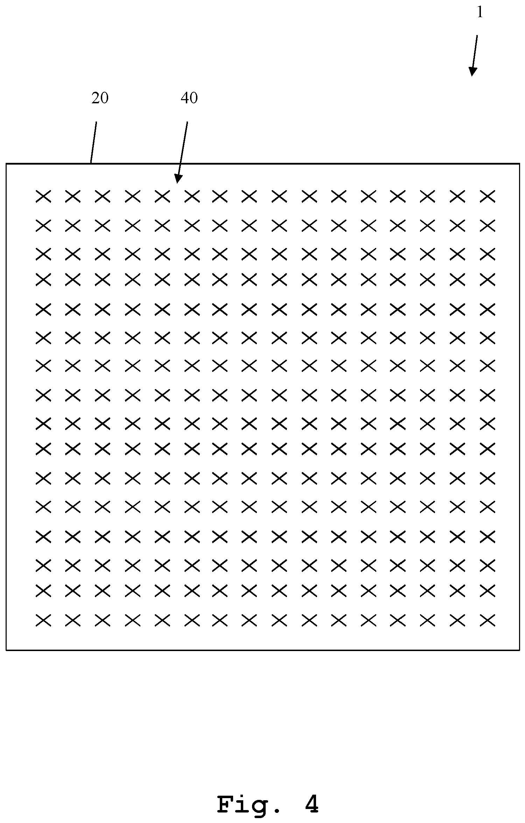

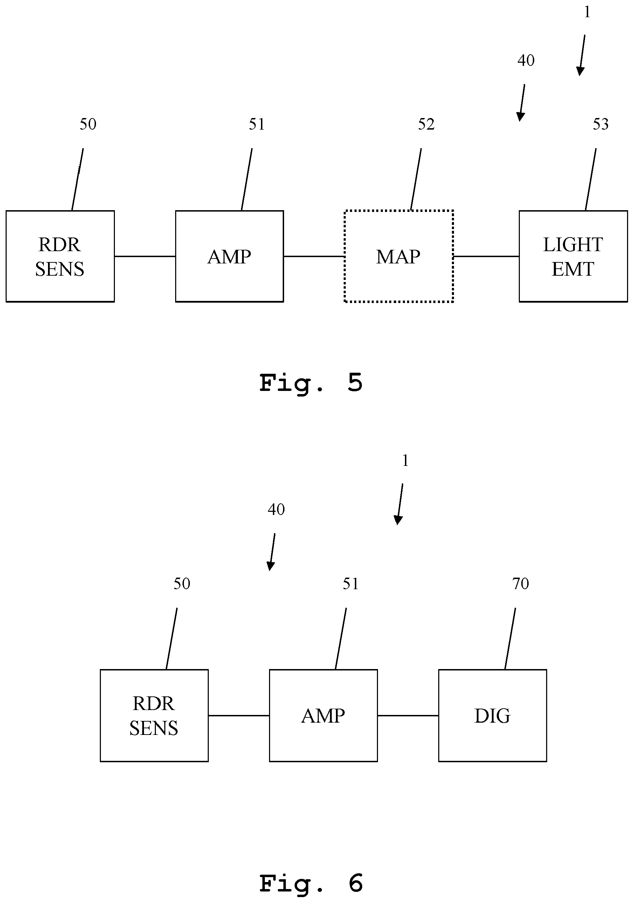

It is important to note that, although here a plurality of radar test panels 10 in a half-circle shape around a front portion of the vehicle are shown, the present invention is not limited to this embodiment. Also, different shapes, like a half-ellipse shape or a U-shape, are possible. Also, a use of only one or two panels is possible. With regard to the arrangement of the radar test panels, it is referred to the later elaborations regarding Fig. 2 and Fig. 3. With regard to the construction of individual panels, it is referred to the later elaborations regarding Fig. 4. With regard to the construction of individual radar receivers, it is referred to the later elaborations regarding Fig. 5.

In Fig. 2, a second example of the measuring system 1 is shown. Here, only the radar panels 20, 21, 22, 23 and 24, also referred to as a plurality of radar test panels 10, are shown. The radar test panels 20 to 24 are arranged side-by-side. In the embodiment shown here, the radar test panels 20 to 24 are arranged in a straight line, seen from on top.

In Fig. 3, a third example of the measuring system 1 is shown. Here, a top-view of radar test panels 20 to 24 is shown. Here, the radar test panels 20 and 24 are arranged at an angle <180°, for example at an angle of 120° with regard to the respectively neighboring radar test panel 21/23.

In Fig. 4, a detailed view of a single radar test panel 20 is shown. Here, it is easily visible that the radar test panel 20 comprises a 2D radar test array of radar receivers 40. Each radar receiver 40 is therein configured to individually receive radar radiation emitted by the vehicular radar, and emit visible light based upon the received radar radiation. Further details of individual radar receivers are shown in Fig. 5.

In the example of Fig. 4, the 2D radar test array of radar receivers comprises 16x16 radar receivers 40. The invention though is not delimited to this specific number. In practice, the radar test panel 20 can comprise for example 2-100, preferably 10-50 radar receivers on the x-axis. Moreover, in practice the radar test panel 20 can comprise 2-100, preferably 10-50 radar receivers 40 on the y-axis.

In Fig. 5, an embodiment of the inventive measuring system 1 is shown. Here, the inner construction of a single radar receiver 40 is shown. The radar receiver 40 comprises a radar sensor 50, which comprises for example an antenna and a detector, connected to an amplifier 51, which is again connected to a mapper 52, which is moreover connected to a light emitter 53. It is important to note that the mapper 52 only constitutes an optional component, here. In case the mapper 52 is not present, the amplifier 51 is directly connected to the light emitter 53.

In operation, the radar sensor 50 receives radar radiation from the vehicular radar under test and generates a received radar signal, which is handed to the amplifier 51. The amplifier 51 amplifies the received radar signal resulting in an amplified signal. The amplified signal is handed to the light emitter 53, if no mapper 52 is present. The light emitter 53 in this case emits light of a pre-specified brightness and/or color, if the amplified signal exceeds a threshold, and does not emit light if the amplified signal does not exceed the threshold.

Alternatively, if the mapper 52 is present, the amplified signal is handed to the mapper 52, which maps a signal strength of the amplified signal onto a color and/or brightness to be emitted by the light emitter 53. The mapper 52 then hands on the respective color and/or brightness, at which the light emitter 53 is to emit light. Finally, the light emitter 53 then emits light at the color and/or brightness determined by the mapper 52. For example, the mapper 52 could map a signal strength of the amplified radar signal below a pre-specified threshold to no light emission, map a signal strength above the threshold to a brightness proportional to the amount, by which the threshold is exceeded, and map the color to a color temperature proportional to the amount, by which the threshold is exceeded.

It should be pointed out that the radar receiver 40 can either operate completely analog, as shown in Fig. 5, or can operate in a digital manner. In the latter case, a digitizer is added. Such an alternative radar receiver 40 is shown in Fig. 6.

In Fig. 6, a further example which does not form part of the invention is shown. Here a detail view of one of the radar receivers 40 is shown. The radar receiver 40 shown here does not comprise a light emitter, but merely comprises a digitizer 70 directly connected to the amplifier 51.

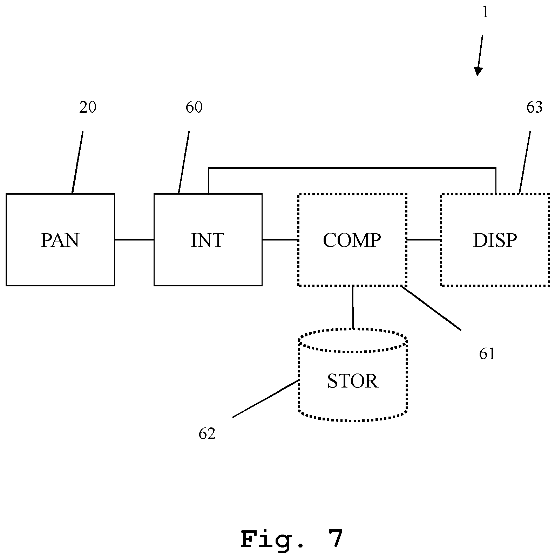

The digitizer digitizes the amplified signal and passes it on, for example to a readout interface 60 as shown in Fig. 7.

It should be pointed out that the digitizer 70 can also be added to the embodiment of Fig. 5, making it compatible to the readout interface 60 of Fig. 7. This digitizer would then be added between the amplifier 51 and the light emitter 53. In case of the presence of the optional mapper 52, either before or after the mapper 52.

In Fig. 7 a further example of the measuring system 1 is shown. Here the measuring system comprises a readout interface 60 connected to at least one radar test panel 20. This embodiment requires the radar receivers 40 to produce digital output signals. Therefore, the radar receivers then each comprise a digitizer, as mentioned earlier.

The readout interface 60 is therein configured to readout a measured radiation pattern of the vehicular radar, formed by radar signal strengths measured by each of the radar receivers, and to provide the read out measured radiation pattern of the vehicular radar as a digital measured radiation pattern. This digital measured radiation pattern can for example be processed further by a software. Alternatively, this measured radiation pattern can be displayed on an optional display 63, which is then connected to the readout interface 60. This display may also be a display of a personal computer.

In a further optional development, the readout interface 60 can be connected to a comparer 61, which in turn is connected to a reference storage 62. The reference storage 62 stores at least one reference radiation pattern, which is readout from the reference storage 62, by the comparer 61. The comparer 61 performs a comparison of the digital measured radiation pattern and the reference radiation pattern, resulting in a measuring result. The measuring result therein can either be a logical pass or fail decision. Alternatively, the comparison result can be a difference signal between the digital measured radiation pattern and the reference radiation pattern. This comparison result can then additionally be displayed on the display 63. Alternatively, the comparison result can also be displayed on the radar test panels 10 by using the light emitters 53 of the radar receivers 40.

It should be pointed out that the comparer 61, the reference storage 62 and the display may be implemented as components of a personal computer. Also an implementation of the optional mapper 52 as a component of a personal computer is possible. The mapper 52 and the comparer 61 may also be implemented as software run by a personal computer.

Finally, in Fig. 8, an embodiment of the inventive measuring method is shown. In a first step 100, at least one radar test panel is arranged in an expected radiation direction of a vehicular radar under test. In a second step 101, a radar signal is emitted by the vehicular radar under test. In a third step 102, radar radiation is received from the vehicular radar, by a plurality of radar receivers comprised by the radar test panel. In a final fourth step 103, a measured beam pattern of the vehicular radar is displayed by emitting visible light based upon the received radar radiation, by the plurality of radar receivers.

It is important to note that the inventive measuring system and inventive measuring method very closely correspond to each other. Therefore, all elaborations regarding the features of the different embodiments of the inventive measuring system are to be understood as disclosed in conjunction with the inventive measuring method as well.

The invention is not limited to the examples and especially not to specific numbers of radar receivers, types of radar sensors, types of light emitters, etc. Especially, the invention is not limited to specific types of vehicles carrying the vehicular radar. The vehicle can be land based vehicle, like automobiles, motorcycles, bicycles, all terrain vehicles, etc.. Also the vehicles can be air based vehicles, like airplanes, helicopters, drones, etc. Even sea based vehicles, like ships, etc. are possible. The characteristics of the exemplary embodiments can be used in any advantageous combination.

## Claims

1. Measuring system (1) for testing a beam pattern of a vehicular radar (3),
comprising at least one radar test panel (10, 20, 21, 22, 23, 24), arranged in an expected radiation direction of the vehicular radar (3),
wherein each of the at least one radar test panels (10, 20, 21, 22, 23, 24) comprises a two-dimensional radar test array of radar receivers (40),
wherein the at least one radar test panel (10, 20, 21, 22, 23, 24) is configured to display a measured beam pattern (12) of the vehicular radar (3), using the radar receivers (40),
wherein each of the radar receivers (40) comprises
- a radar receiver (50), configured to receive the radar radiation from the vehicular radar (3),
- an amplifier (51), configured to amplify the received radar signal, and
- a light emitter (53), configured to emit the visible light based upon the amplified received radar signal.

2. Measuring system (1) according to claim 1,
wherein the at least one radar test panel (10, 20, 21, 22, 23, 24) is configured to output a digitized measured beam pattern (12) of the vehicular radar (3).

3. Measuring system (1) according to any of claims 1 to 2, comprising at least two radar test panels (10, 20, 21, 22, 23, 24), preferably arranged side-by-side,
wherein the at least two radar test panels (10, 20, 21, 22, 23, 24) are arranged in an angle smaller than 180° with regard to each other.

4. Measuring system (1) according to any of claims 1 to 3, comprising a plurality of radar test panels (10, 20, 21, 22, 23, 24), arranged
- in a half-circle or half-ellipse or U-shape, encompassing at least part of a vehicle (2) comprising the vehicular radar (3), or
in any shape surrounding the entire vehicle (2).

5. Measuring system (1) according to any one of claims 1 to 4,
wherein the light emitter (53) comprises at least one light emitting diode LED, preferably an RGB-LED.

6. Measuring system (1) according to any one of claims 1 to 5,
wherein the light emitter (53) is configured to emit light of a pre-specified brightness and/or color, if the amplified radar signal exceeds a threshold.

7. Measuring system (1) according to any one of claims 1 to 5,
wherein each of the radar receivers (40) comprises a mapper (52), configured to map a signal strength of the amplified received radar signal to a color and/or brightness of visible light to be emitted by the light emitter, and
wherein the light emitter (53) is configured to emit light of the color and/or brightness determined by the mapper (52) .

8. Measuring system (1) according to any of claims 1 to 7,
wherein the at least one radar test panel (10, 20, 21, 22, 23, 24) comprises a reference marking (11), showing a shape of a reference radiation pattern.

9. Measuring system (1) according to any of claims 1 to 8,
wherein each of the radar receivers (40) comprises a digitizer (70), configured to digitize a signal generated from radar radiation emitted by the vehicular radar and received by the radar receiver (40), resulting in a digital received radar signal,
comprising a readout interface (60), connected to the digitizer (70) of each of the radar receivers (40), configured to read out a digital measured radiation pattern of the vehicular radar (3), formed by the digital received radar signals.

10. Measuring system (1) according to claim 9,
comprising a reference storage (62), configured to store a digital reference radiation pattern for at least one vehicular radar (3) type.

11. Measuring system (1) according to claim 10,
comprising a reference comparer (61), configured to compare the digital measured radiation pattern to the stored reference radiation pattern, generating a comparison result.

12. Measuring system (1) according to claim 10 or 11,
wherein the at least one radar test panel (10, 20, 21, 22, 23, 24) is configured to display the at least one reference radiation pattern and/or the comparison result before and/or after and/or while displaying the measured beam pattern of the vehicular radar (3), using the 2D radar test array of radar receivers (40).

13. Measuring system (1) according to any of claims 9 to 12
comprising a display (63), configured to display the digital measured radiation pattern and/or the reference radiation pattern and/or the comparison result.

14. Measuring method for testing a beam pattern of a vehicular radar (3),
with the following steps:
- arranging (100) at least one radar test panel (10, 20, 21, 22, 23, 24) in an expected radiation direction of the vehicular radar (3),
- emitting (101) a radar signal by the vehicular radar (3),
- receiving (102) radar radiation from the vehicular radar (3) by a plurality of radar receivers (40) comprised by the at least one radar test panel (10, 20, 21, 22, 23, 24),
- displaying (103) a measured beam pattern of the vehicular radar (3), by emitting visible light based upon the received radar radiation, by the plurality of radar receivers (40),
- amplifying, by an amplifier (51) of each radar receiver (40), radar radiation received from the vehicular radar (3), and
- emitting, by a light emitter (53) of each radar receiver (40), the visible light based upon the amplified received radar signal.

## Patentansprüche

1. Messsystem (1) zum Prüfen eines Strahlmusters eines Fahrzeugradars (3),
umfassend mindestens ein Radarprüffeld (10, 20, 21, 22, 23, 24), das in einer erwarteten Strahlungsrichtung des Fahrzeugradars (3) angeordnet ist,
wobei jedes des mindestens einen Radarprüffelds (10, 20, 21, 22, 23, 24) eine zweidimensionale Radarprüfanordnung von Radarempfängern (40) umfasst,
wobei das mindestens eine Radarprüffeld (10, 20, 21, 22, 23, 24) konfiguriert ist, um ein gemessenes Strahlmuster (12) des Fahrzeugradars (3) unter Verwendung der Radarempfänger (40) anzuzeigen,
wobei jeder der Radarempfänger (40) umfasst
- einen Radarempfänger (50), der konfiguriert ist, um die Radarstrahlung von dem Fahrzeugradar (3) zu empfangen,
- einen Verstärker (51), der konfiguriert ist, um das empfangene Radarsignal zu verstärken, und
- einen Lichtemitter (53), der konfiguriert ist, um das sichtbare Licht basierend auf dem verstärkten empfangenen Radarsignals zu emittieren.

2. Messsystem (1) nach Anspruch 1, wobei das mindestens eine Radarprüffeld (10, 20, 21, 22, 23, 24) konfiguriert ist, um ein digitalisiertes gemessenes Strahlmuster(12) des Fahrzeugradars (3) auszugeben.

3. Messsystem (1) nach einem der Ansprüche 1 bis 2, umfassend mindestens zwei Radarprüffelder (10, 20, 21, 22, 23, 24), die vorzugsweise nebeneinander angeordnet sind,
wobei die mindestens zwei Radarprüffelder (10, 20, 21, 22, 23, 24) in einem Winkel von weniger als 180° in Bezug zueinander angeordnet sind.

4. Messsystem (1) nach einem der Ansprüche 1 bis 3, umfassend eine Vielzahl von Radarprüffeldern (10, 20, 21, 22, 23, 24), die wie folgt angeordnet sind
- in einem Halbkreis oder einer Halbellipse oder einer U-Form, die mindestens einen Teil eines Fahrzeugs (2), umfassend das Fahrzeugradar (3) umgeben, oder
in beliebiger Form, die das gesamte Fahrzeug (2) umschließt.

5. Messsystem (1) nach einem der Ansprüche 1 bis 4, wobei der Lichtemitter (53) mindestens eine Leuchtdiode LED, vorzugsweise eine RGB-LED, umfasst.

6. Messsystem (1) nach einem der Ansprüche 1 bis 5,
wobei der Lichtemitter (53) konfiguriert ist, um Licht mit einer zuvor spezifizierten Helligkeit und/oder Farbe zu emittieren, falls das verstärkte Radarsignal einen Schwellenwert überschreitet.

7. Messsystem (1) nach einem der Ansprüche 1 bis 5,
wobei jeder der Radarempfänger (40) einen Mapper (52) umfasst, der konfiguriert ist, um eine Signalstärke des verstärkten empfangenen Radarsignals auf eine Farbe und/oder Helligkeit des sichtbaren Lichts abzubilden, das durch den Lichtemitter emittiert werden soll, und
wobei der Lichtemitter (53) konfiguriert ist, um Licht in der von dem Mapper (52) bestimmten Farbe und/oder Helligkeit zu emittieren.

8. Messsystem (1) nach einem der Ansprüche 1 bis 7,
wobei das mindestens eine Radarprüffeld (10, 20, 21, 22, 23, 24) eine Referenzmarkierung (11) umfasst, die eine Form eines Referenzstrahlungsmusters zeigt.

9. Messsystem (1) nach einem der Ansprüche 1 bis 8,
wobei jeder der Radarempfänger (40) einen Digitalisierer (70) umfasst, der konfiguriert ist, um ein Signal zu digitalisieren, das aus der von dem Fahrzeugradar emittierten und von dem Radarempfänger (40) empfangenen Radarstrahlung erzeugt wird, das in einem digitalen empfangenen Radarsignal resultiert,
umfassend eine Ausleseschnittstelle (60), die mit dem Digitalisierer (70) jedes der Radarempfänger (40) verbunden und konfiguriert ist, um ein digital gemessenes Strahlungsmuster des Fahrzeugradars (3) auszulesen, das durch die digital empfangenen Radarsignale ausgebildet wird.

10. Messsystem (1) nach Anspruch 9, umfassend einen Referenzspeicher (62), der konfiguriert ist, um ein digitales Referenzstrahlungsmuster für mindestens eine Art von Fahrzeugradar (3) zu speichern.

11. Messsystem (1) nach Anspruch 10, umfassend einen Referenzvergleicher (61), der konfiguriert ist, um das digital gemessene Strahlungsmuster mit dem gespeicherten Referenzstrahlungsmuster zu vergleichen und ein Vergleichsergebnis zu erzeugen.

12. Messsystem (1) nach Anspruch 10 oder 11, wobei das mindestens eine Radarprüffeld (10, 20, 21, 22, 23, 24) konfiguriert ist, um das mindestens eine Referenzstrahlungsmuster und/oder das Vergleichsergebnis vor und/oder nach und/oder während des Anzeigens des gemessenen Strahlmusters des Fahrzeugradars (3) unter Verwendung der 2D-Radarprüfanordnung von Radarempfängern (40) anzuzeigen.

13. Messsystem (1) nach einem der Ansprüche 9 bis 12, umfassend eine Anzeige (63), die konfiguriert ist, um das digital gemessene Strahlungsmuster und/oder das Referenzstrahlungsmuster und/oder das Vergleichsergebnis anzuzeigen.

14. Messverfahren zum Prüfen eines Strahlmusters eines Fahrzeugradars (3), mit den folgenden Schritten:
- Anordnen (100) mindestens eines Radarprüffelds (10, 20, 21, 22, 23, 24) in einer erwarteten Strahlungsrichtung des Fahrzeugradars (3),
- Emittieren (101) eines Radarsignals durch das Fahrzeugradar (3),
- Empfangen (102) von Radarstrahlung von dem Fahrzeugradar (3) durch eine Vielzahl von Radarempfängern (40), die in dem mindestens einen Radarprüffeld (10, 20, 21, 22, 23, 24) enthalten sind,
- Anzeigen (103) eines gemessenen Strahlmusters des Fahrzeugradars (3) durch Emittieren von sichtbarem Licht basierend auf der empfangenen Radarstrahlung durch die Vielzahl von Radarempfängern (40),
- Verstärken, durch einen Verstärker (51) jedes Radarempfängers (40), der von dem Fahrzeugradar (3) empfangenen Radarstrahlung, und
- Emittieren, durch einen Lichtemitter (53) jedes Radarempfängers (40), des sichtbaren Lichts basierend auf dem verstärkten empfangenen Radarsignal.

## Revendications

1. Système de mesure (1) permettant de tester un diagramme de faisceau d'un radar de véhicule (3),
comprenant au moins un panneau d'essai radar (10, 20, 21, 22, 23, 24), disposé dans une direction de rayonnement prévue du radar de véhicule (3),
dans lequel chaque panneau d'au moins un des panneaux d'essai radar (10, 20, 21, 22, 23, 24) comprend un réseau d'essai radar bidimensionnel de récepteurs radar (40),
dans lequel l'au moins un panneau d'essai radar (10, 20, 21, 22, 23, 24) est configuré pour afficher un diagramme de faisceau mesuré (12) du radar de véhicule (3), à l'aide des récepteurs radar (40),
dans lequel chacun des récepteurs radar (40) comprend
- un récepteur radar (50), configuré pour recevoir le rayonnement radar à partir du radar de véhicule (3),
- un amplificateur (51), configuré pour amplifier le signal radar reçu, et
- un émetteur de lumière (53), configuré pour émettre de la lumière visible en fonction du signal radar reçu amplifié.

2. Système de mesure (1) selon la revendication 1, dans lequel l'au moins un panneau de test radar (10, 20, 21, 22, 23, 24) est configuré pour délivrer en sortie un diagramme de faisceau mesuré numérisé (12) du radar de véhicule (3).

3. Système de mesure (1) selon l'une quelconque des revendications 1 à 2, comprenant au moins deux panneaux d'essai radar (10, 20, 21, 22, 23, 24), de préférence disposés côte à côte,
dans lequel les au moins deux panneaux d'essai radar (10, 20, 21, 22, 23, 24) sont disposés dans un angle inférieur à 180° l'un par rapport à l'autre.

4. Système de mesure (1) selon l'une quelconque des revendications 1 à 3, comprenant une pluralité de panneaux de test radar (10, 20, 21, 22, 23, 24), disposés
- en demi-cercle ou en demi-ellipse ou en forme de U, englobant au moins une partie d'un véhicule (2) comprenant le radar de véhicule (3), ou
en une forme quelconque entourant l'ensemble du véhicule (2).

5. Système de mesure (1) selon l'une quelconque des revendications 1 à 4, dans lequel l'émetteur de lumière (53) comprend au moins une diode électroluminescente DEL, de préférence une DEL RVB.

6. Système de mesure (1) selon l'une quelconque des revendications 1 à 5,
dans lequel l'émetteur de lumière (53) est configuré pour émettre une lumière d'une luminosité et/ou d'une couleur prédéfinies, si le signal radar amplifié dépasse un seuil.

7. Système de mesure (1) selon l'une quelconque des revendications 1 à 5,
dans lequel chacun des récepteurs radar (40) comprend un mappeur (52), configuré pour mapper une intensité de signal du signal radar reçu amplifié sur une couleur et/ou une luminosité de lumière visible devant être émise par l'émetteur de lumière, et
dans lequel l'émetteur de lumière (53) est configuré pour émettre une lumière de la couleur et/ou de la luminosité déterminée par le mappeur (52).

8. Système de mesure (1) selon l'une quelconque des revendications 1 à 7,
dans lequel l'au moins un panneau d'essai radar (10, 20, 21, 22, 23, 24) comprend un marquage de référence (11) indiquant une forme d'un diagramme de rayonnement de référence.

9. Système de mesure (1) selon l'une quelconque des revendications 1 à 8,
dans lequel chacun des récepteurs radar (40) comprend un numériseur (70), configuré pour numériser un signal généré par le rayonnement radar émis par le radar de véhicule et reçu par le récepteur radar (40), permettant d'obtenir un signal radar numérique reçu,
comprenant une interface d'extraction (60), connectée au numériseur (70) de chacun des récepteurs radar (40), configurée pour extraire un diagramme de rayonnement numérique mesuré du radar de véhicule (3), formé par les signaux radar numériques reçus.

10. Système de mesure (1) selon la revendication 9, comprenant un stockage de référence (62), configuré pour stocker un diagramme de rayonnement de référence numérique pour au moins un type de radar de véhicule (3).

11. Système de mesure (1) selon la revendication 10, comprenant un comparateur de référence (61), configuré pour comparer le diagramme de rayonnement numérique mesuré au diagramme de rayonnement de référence stocké, générant un résultat de comparaison.

12. Système de mesure (1) selon la revendication 10 ou 11, dans lequel l'au moins un panneau d'essai radar (10, 20, 21, 22, 23, 24) est configuré pour afficher l'au moins un diagramme de rayonnement de référence et/ou le résultat de la comparaison avant et/ou après et/ou pendant l'affichage du diagramme de faisceau mesuré du radar de véhicule (3), à l'aide du réseau d'essai radar 2D de récepteurs radar (40).

13. Système de mesure (1) selon l'une quelconque des revendications 9 à 12, comprenant un dispositif d'affichage (63) configuré pour afficher le diagramme de rayonnement numérique mesuré et/ou le diagramme de rayonnement de référence et/ou le résultat de comparaison.

14. Procédé de mesure permettant de mettre à l'essai le diagramme de faisceau d'un radar de véhicule (3), avec les étapes suivantes :
- la disposition (100) d'au moins un panneau d'essai radar (10, 20, 21, 22, 23, 24) dans une direction de rayonnement prévue du radar de véhicule (3),
- l'émission (101) d'un signal radar par le radar de véhicule (3),
- la réception (102) du rayonnement radar à partir du radar de véhicule (3) par une pluralité de récepteurs radar (40) compris dans l'au moins un panneau d'essai radar (10, 20, 21, 22, 23, 24),
- l'affichage (103) d'un diagramme de faisceau mesuré du radar de véhicule (3), en émettant une lumière visible en fonction du rayonnement radar reçu, par la pluralité de récepteurs radar (40),
- l'amplification, par un amplificateur (51) de chaque récepteur radar (40), du rayonnement radar reçu à partir du radar de véhicule (3), et
- l'émission, par un émetteur de lumière (53) de chaque récepteur radar (40), de la lumière visible en fonction du signal radar reçu amplifié.
